# EUROPÄISCHE PATENTANMELDUNG

(11) **EP 2 365 317 A1**
(43) Veröffentlichungstag der Anmeldung: **14.09.2011**
(21) Anmeldenummer: 11155130.5
(22) Anmeldetag: 21.02.2011
(51) Int. Cl.: G01N 21/64, C12M 1/34

(54) **Verfahren für einen beschleunigten Anregungswellenlängen-Scan bei einem Fluoreszenzmikroskop**

(30) Priorität: 11.03.2010 DE 102010015915
(71) Anmelder: Leica Microsystems CMS GmbH, 35578 Wetzlar (DE)
(72) Erfinder: Sieber, Jochen, 68163 Mannheim (DE)
(74) Vertreter: Schaumburg, Thoenes, Thurn, Landskron, Eckert

(57) **Zusammenfassung**

Zum Ermitteln eines Anregungs- (76) und/oder eines Emissionsspektrums (78) mindestens eines Farbstoffs wird eine Probe (28) mit Hilfe von Anregungslicht (21) einer ersten Anregungswellenlänge beleuchtet und Detektionslicht (29) eines vorgegebenen Detektions-Wellenlängenbereichs wird detektiert. Abhängig von dem detektierten Detektionslicht (29) wird das Anregungs- und/oder Emissionsspektrum (76, 78) ermittelt. Es werden eine erste Beleuchtungsphase (PH_1) und mindestens eine zweite Beleuchtungsphase (PH_2) durchgeführt. In der ersten Beleuchtungsphase (PH_1) wird die Probe (28) mit Hilfe von Anregungslicht (21) der ersten Anregungswellenlänge (40) beleuchtet und es werden Detektionslicht (29) eines ersten Detektions-Wellenlängenbereichs (31) und gleichzeitig mindestens Detektionslicht (29) eines zweiten Detektions-Wellenlängenbereichs (32) detektiert. In der zweiten Beleuchtungsphase (PH_2) wird die Probe (28) mit Hilfe von Anregungslicht (21) einer zweiten Anregungswellenlänge (42) beleuchtet und es wird Detektionslicht (29) mindestens des ersten und/oder zweiten Detektions-Wellenlängenbereichs (31, 32) detektiert.

## Beschreibung

Die Erfindung betrifft ein Verfahren zum Ermitteln eines Anregungsspektrums und/oder eines Emissionsspektrums mindestens eines fluoreszierenden Farbstoffs mit Hilfe eines Fluoreszenzmikroskops nach dem Oberbegriff des Anspruchs 1.

Vorgänge in Proben, beispielsweise in lebenden Zellen, können unter anderem mit Hilfe von auf Fluoreszenzeffekten beruhenden Mikroskopieverfahren untersucht werden, beispielsweise mit Hilfe eines konfokalen Fluoreszenzmikroskops. Dazu werden in die Probe fluoreszierende Farbstoffe eingebracht. Ein möglichst gutes Signale- Rauschverhältnis bei minimaler Lichtbelastung kann dadurch erzielt werden, dass die Farbstoffe mit Anregungslicht einer farbstoffabhängigen optimalen Anregungswellenlänge angeregt werden. Dabei variiert die optimale Anregungswelle nicht nur abhängig von der Wahl des Farbstoffes sondern auch abhängig von der Probe, da sich aufgrund eines Zusammenwirkens zwischen dem Farbstoff und der Probe das Anregungsspektrum des Farbstoffs verändern kann. Beim Verwenden eines neuen Farbstoffs oder beim Verwenden eines bekannten Farbstoffs in Zusammenhang mit einer Probe, die zuvor noch nicht mit dem Farbstoff verwendet wurde, erleichtert ein Ermitteln eines Anregungsspektrums des fluoreszierenden Farbstoffs das Auffinden der optimalen Anregungswellenlänge für diesen Farbstoff in Verbindung mit der Probe in der er sich befindet.

Darüber hinaus ist es bekannt, unabhängig von dem Anregungsspektrum ein Emissionsspektrum der verwendeten Farbstoffe innerhalb des speziellen Präparats zu ermitteln, wobei dann ein Vergleich der Anregungsspektren und Emissionsspektren dazu dienen kann, Fluoreszenzsignale von Farbstoffen zu unterscheiden, deren Emissions- bzw. Anregungsspektren sich überlappen.

Zum Ermitteln des Anregungsspektrums eines Farbstoffs in der Probe ist es bekannt, eine Wellenlängenserie (Lambda Scann) bei gleichbleibender Laserintensität von einer einzigen optischen Ebene oder einem Bereich in Form eines Stapels aus Einzelbildern aufzunehmen. Diese werden bei bestimmten Wellenlängen mit einem Detektor ausgewertet. Beispielsweise werden dazu die Anfangs- oder Endanregungswellenlänge und die Schrittweite festegelegt, sodass das Anregungsmaximum des fluoreszierenden Farbstoffs ermittelt werden kann. Auf diese Weise ist das Bestimmen der Anregungswellenlänge für den fluoreszierenden Farbstoff sehr zeitraubend, da dafür viele automatische Einstellvorgänge nötig sind. Insbesondere muss durch mechanisches Verstellen eines oder mehrerer Spiegel, eines oder mehrerer Detektoren und/oder eines oder mehrerer Prismen eine Detektion der Anregungswellenlänge variiert werden.

Zum Ermitteln des Emissionsspektrums ist es bekannt, bei gleichbleibender Anregungswellenlänge Licht in unterschiedlichen Detektions-Wellenlängenbereichen zu erfassen und die erfassten Intensitäten zum Erstellen des Emissionsspektrums zu nutzen.

Aufgabe der Erfindung ist es, ein Verfahren zum Ermitteln eines Anregungsspektrums und/oder eines Emissionsspektrums eines fluoreszierenden Farbstoffs mit Hilfe eines Fluoreszenzmikroskops zu schaffen, das besonders schnell das Ermitteln des Anregungsspektrums bzw. des Emissionsspektrums ermöglicht und/oder das automatisch beim Ermitteln des Anregungsspektrums das Emissionsspektrum liefert.

Die Aufgabe wird gelöst durch die Merkmale der unabhängigen Ansprüche. Vorteilhaft der Ausgestaltungen sind in den Unteransprüchen angegeben.

Die Erfindung zeichnet sich dadurch aus, dass eine erste Beleuchtungsphase und mindestens eine zweite Beleuchtungsphase durchgeführt werden. In einer ersten Beleuchtungsphase wird die Probe mit Hilfe von Anregungslicht der ersten Anregungswellenlänge beleuchtet und Detektionslicht eines ersten Detektions-Wellenlängenbereichs wird mit Hilfe eines ersten Detektors detektiert. Gleichzeitig wird mindestens Detektionslicht eines zweiten Detektions-Wellenlängenbereichs mit Hilfe eines zweiten Detektors detektiert. In der zweiten Beleuchtungsphase wird die Probe mit Hilfe von Anregungslicht einer zweiten Anregungswellenlänge beleuchtet und es wird Detektionslicht mindestens des ersten und/oder zweiten Detektions-Wellenlängenbereichs detektiert.

Somit wird insbesondere zu Gunsten eines besonders schnellen Ermittelns des Anregungsspektrums ausgenutzt, dass ein Verstellen der Anregungswellenlänge von der ersten Beleuchtungsphase zu der zweiten Beleuchtungsphase nahezu ohne Zeitverzögerung erfolgen kann, was zu dem besonders schnellen Ermitteln des Anregungsspektrums beiträgt. Darüber hinaus trägt das Verwenden von mehreren Detektoren dazu bei, eine bei einer vorgegebenen Anregungswellenlänge auf einen vorgegebenen Detektions-Wellenlängenbereich entfallende Intensität des Detektionslicht zu ermitteln und so beim Ermitteln des Anregungsspektrums automatisch Informationen zu erhalten, durch die das Emissionsspektrum ermittelt werden kann.

Das Anregungs- und/oder Emissionsspektrum wird abhängig von dem detektierten Detektionslicht ermittelt, indem in jeder Beleuchtungsphase die mit den einzelnen Detektoren gemessenen Intensitäten aufsummiert werden, wobei das Summationsergebnis jeder Beleuchtungsphase je eine Stützstelle des Anregungsspektrums liefert. Nach Durchlaufen der Beleuchtungsphasen sind dann bereits mehrere Stützstellen des Anregungsspektrums bekannt. Die Information darüber, welcher Intensitätsanteil pro Beleuchtungsphase auf die einzelnen Detektoren abfällt, kann zum Ermitteln des Emissionsspektrums genutzt werden.

Bei dem Verfahren handelt es sich um ein bildgebendes Verfahren. Das bedeutet, dass beim Durchführen des Verfahrens ein Bild der Probe, insbesondere der fluoreszierenden Farbstoffe innerhalb der Probe gewonnen wird. Das Emissions- bzw. Anregungsspektrum kann dann für jeden einzelnen Pixel des Bildes gewonnen werden. Ferner können mit Hilfe des beschriebenen Verfahrens nicht nur das Anregungs- bzw. Emissionsspektrums eines fluoreszierenden Farbstoffs ermittelt werden, sondern auch mehrere unterschiedlicher Farbstoffe. Ferner können diese unterschiedlichen Farbstoffe anhand der gewonnenen Informationen voneinander unterschieden werden. So kann ein Mehrkanalbild erzeugt werden, bei dem in jedem Kanal nur ein Farbstoff gezeigt ist.

In einer vorteilhaften Ausgestaltung werden die erste und die zweite Beleuchtungsphase zunächst in einem ersten Durchlauf durchgeführt. Bei mindestens einem zweiten Durchlauf wird nachfolgend die Probe mit Hilfe von Anregungslicht beleuchtet, dessen Anregungswellenlänge bezogen auf die erste Anregungswellenlänge verschoben ist. Das von der Probe ausgehende Detektionslicht eines Detektions-Wellenlängenbereichs wird detektiert, der in Bezug auf den Detektions-Wellenlängenbereich beim ersten Durchlauf abhängig von der veränderten Anregungswellenlänge verschoben ist. Bei mindestens einem, zwei oder mehreren weiteren Durchläufen werden jeweils die Anregungswellenlänge verändert und der Detektions-Wellenlängenbereich verschoben. Jeder Durchlauf umfasst eine erste Beleuchtungsphase und mindestens eine zweite Beleuchtungsphase. Bei den weiteren Durchläufen werden jeweils die Anregungswellenlängen verändert und die Detektions-Wellenlängenbereiche verschoben. Das Verstellen optischer Elemente zum Verschieben der Detektions-Wellenlängenbereiche erfordert das Verstellen optischer Elemente, was zeitaufwendig ist und jedes Mal eine entsprechende Totzeit impliziert. Das Beschränken des Verschiebens der Detektions-Wellenlängenbereiche und somit das Beschränken des Verstellens der optischen Elemente auf den jeweiligen Beginn oder das jeweilige Ende der Durchläufe nutzt vorteilhaft aus, dass das Verstellen der Anregungswellenlänge während eines der Durchläufe nahezu ohne Zeitverzögerung erfolgt, wodurch die Gesamtzeit zur Aufnahme des Anregungsspektrums verkürzt wird.

Zusätzlich zu den zwei Beleuchtungsphasen können während eines Durchlaufs eine, zwei oder mehr weitere Beleuchtungsphasen durchgeführt werden, während der Detektionslicht einer, zweier bzw. mehrerer weiterer Wellenlängen mit entsprechenden weiteren Detektoren detektiert wird. Somit werden bei einem Durchlauf mindestens drei Stützstellen zum Ermitteln des Anregungsspektrums ermittelt. Dies verkürzt die Zeit zusätzlich, die zum Ermitteln des Anregungsspektrums aufgebracht werden muss. Bei den Detektoren, insbesondere den drei Detektoren kann es sich um einzelne Detektoren handeln, beispielsweise um fünf Avalanche-Photodioden oder um Photomultiplier. Alternativ dazu kann auch ein Detektor-Array mit drei oder mehr Einzeldetektoren vorgesehen sein oder es kann eine Kamera mit mehreren lichtempfindlichen Einzelbereichen zur Detektion des Detektionslichts verwendet werden.

Falls die Anregungswellenlänge in einem Detektions-Wellenlängenbereich liegt, der aktuell von einem der Detektoren erfasst wird, so kann zum Unterdrücken des Anregungssignals der entsprechende Detektor ausgeblendet werden.

Anhand des Anregungsspektrums können in vorteilhafter Weise Fluoreszenzsignale von Farbstoffen unterschieden werden, deren Emissionsspektren überlappen. Die Unterscheidung von Farbstoffen kann auch aufgrund des Anregungs- und Emissionsspektrums erfolgen. Dies kann besonders anschaulich dadurch gezeigt werden, indem abhängig von dem Anregungs- und Emissionsspektrum eine spektrale Matrix aufgestellt wird.

Falls für das Ermitteln des Anregungs- und/oder des Emissionsspektrums ein Scannmikroskop verwendet wird, so können die unterschiedlichen Beleuchtungsphasen beispielsweise beim Scannen unterschiedlicher Zeilen des Bildes durchgeführt werden. Insbesondere kann während einer der Beleuchtungsphasen in eine erste Richtung gescannt werden und die darauffolgende Beleuchtungsphase kann durchgeführt werden, wenn in eine der ersten Richtung entgegen gesetzte Richtung gescannt wird. Dadurch kann eine Dauer zum Durchführen des Verfahrens halbiert werden.

Ausführungsbeispiele der Erfindung sind nachfolgend anhand von schematischen Zeichnungen näher erläutert.

Es zeigen:
- Figur 1: ein Scannmikroskop,
- Figur 2: ein Ablaufdiagramm eines Programms zum Ermitteln eines Anregungsspektrums,
- Figur 3: eine erste Ausführungsform einer ersten Detektoranordnung,
- Figur 4: eine zweite Ausführungsform der ersten Detektoranordnung,
- Figur 5: eine Darstellung zum Erläutern mehrerer Durchläufe zum Ermitteln des Anregungsspektrums,
- Figur 6: das Anregungsspektrum nach einem ersten Durchlauf,
- Figur 7: das Anregungsspektrum nach einem zweiten Durchlauf,
- Figur 8: das Anregungsspektrum nach einem letzten Durchlauf,
- Figur 9: das Anregungsspektrum und ein entsprechendes Emissionsspektrum,
- Figur 10: zwei Anregungsspektren und entsprechende sich überlappende Emissionsspektren.

Elemente gleicher Konstruktion der Funktion sind figurenübergreifend mit den gleichen Bezugszeichen gekennzeichnet.

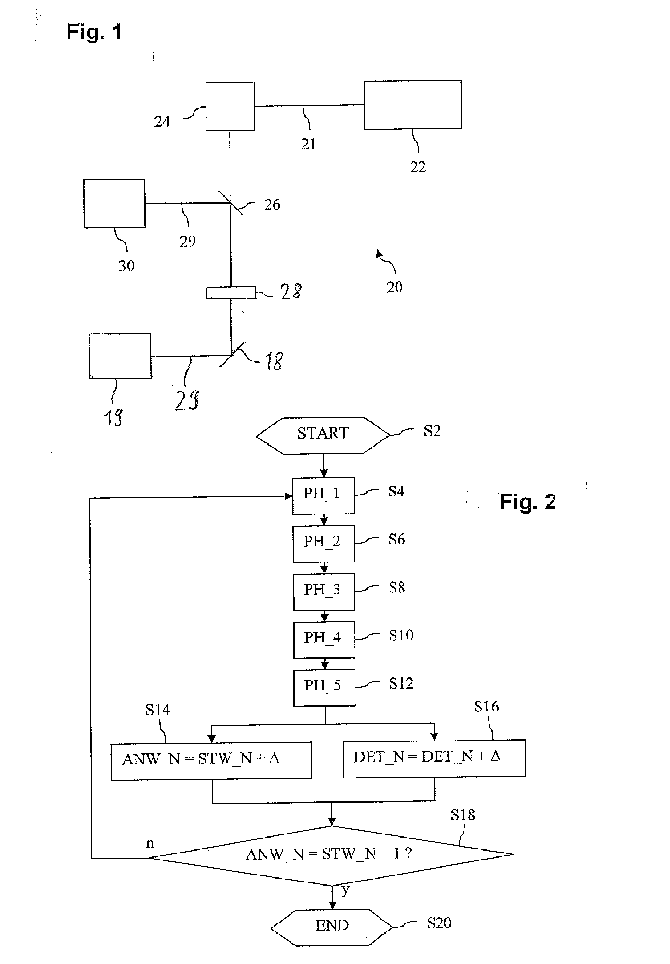

Figur 1 zeigt ein Fluoreszenzmikroskop, insbesondere ein Scannmikroskop 20. Das Scannmikroskop 20 umfasst eine Lichtquelle 22, die vorzugsweise eine breitbandige Lichtquelle, beispielsweise ein Weißlichtlaser ist. Die Lichtquelle 22 erzeugt einen Beleuchtungslichtstrahl 21. Der Beleuchtungslichtstrahl 21 wird über eine Scanneinheit 24 hin zu einem ersten Strahlteiler 26 abgelenkt, der den Beleuchtungslichtstrahl 21 hin zu einer Probe 28 durchlässt. Mit Hilfe der Scaneinheit 24 wird der Beleuchtungslichtstrahl 21 so abgelenkt, dass ein Fokusbereich, beispielsweise ein Fokuspunkt auf oder in der Probe 28 ein vorgegebenes Scanfeld optisch abtastet. Dabei kann eine Ablenkeinrichtung der Scaneinheit resonant betrieben werden, wodurch ein relativ großer Scanbereich relativ schnell abgetastet werden kann, im Vergleich zu einer nicht resonant betriebenen Ablenkeinrichtung. Der Beleuchtungslichtstrahl 21 regt einen fluoreszierenden Farbstoff in der Probe 28 zum Fluoreszieren an. Ein aufgrund des Fluoreszenzlichts entstehender Detektionslichtstrahl 29 wird teilweise zurück in Richtung des Strahlteilers 26 abgestrahlt, der den Detektionslichtstrahl 29 hin zu einer ersten Detektoranordnung 30 ablenkt. Zusätzlich wird ein Teil des Detektionslichts in Richtung hin zu einem zweiten Strahlteiler 18 abgestrahlt, der das Detektionslicht hin zu einer zweiten Detektoranordnung 19 ablenkt. Die Detektion des Fluoreszenzlichts erfolgt somit bidirektional. Alternativ dazu kann die Detektion lediglich in einer Richtung erfolgen und/oder die Anregung kann zusätzlich oder alternativ zu dem Beleuchtungslichtstrahl 21 aus einer anderen Richtung erfolgen. Das Mikroskop, insbesondere das Scanmikroskop 20 eignet sich zum Aufnehmen eines Anregungs- und/oder eines Emissionsspektrums eines oder mehrer fluoreszierender Farbstoffe, die in der Probe 28 enthalten sind.

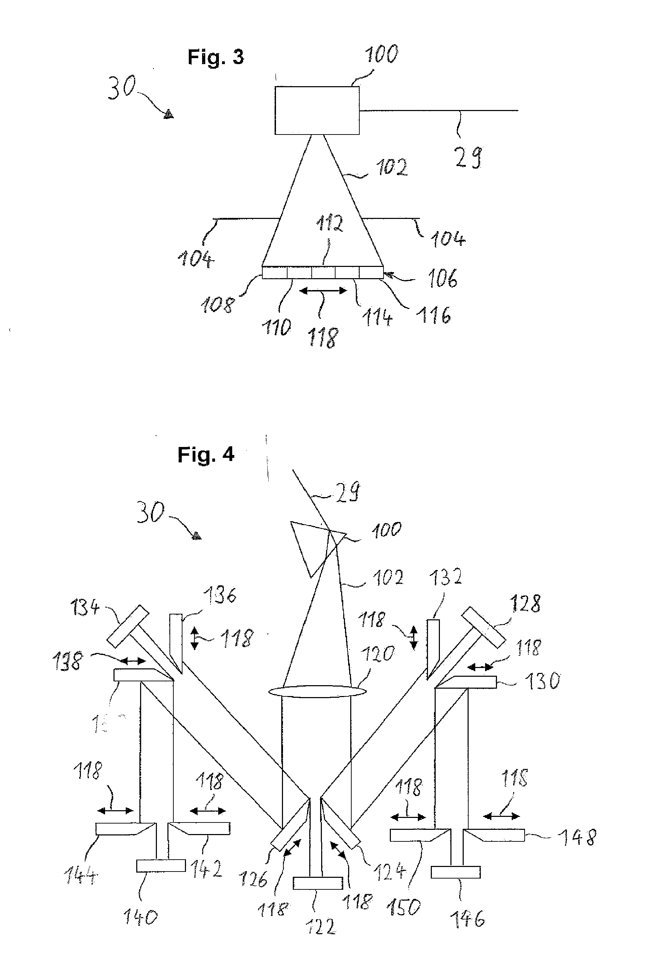

Figur 3 zeigt eine erste Ausführungsform der ersten Detektoranordnung 30. Die zweite Detektoranordnung 19 kann bezüglich ihres Aufbaus der ersten Detektoranordnung 19 entsprechen oder von dieser abweichen. Die erste Detektoranordnung 30 umfasst ein spektral aufspaltendes Element 100, das den Detektionslichtstrahl 29 nach unterschiedlichen Wellenlängen aufspaltet. Das aufgespaltete Detektionslicht 102 wird dann über eine Blendenanordnung 104 auf fünf Detektoren abgelenkt, insbesondere auf ein entlang einer Bewegungsrichtung 118 verschiebbares Detektor-Array gerichtet, das aus einem ersten Detektor 108, einem zweiten Detektor 110, einem dritten Detektor 112, einem vierten Detektor 114 und einem fünften Detektor 116 besteht. Alternativ dazu können auch nur zwei, drei oder vier oder auch mehr als fünf Detektoren vorgesehen sein. Das Detektor-Array ermöglicht, beim Beleuchten der Probe 28 mit Anregungslicht einer einzigen Anregungswellenlänge fünf unterschiedliche Detektions-Wellenlängenbereiche des Detektionslichts unabhängig voneinander zu erfassen. Das Verschieben des Detektorarrays 106 entlang der Bewegungsrichtung 118 ermöglicht, die Detektions-Wellenlängenbereiche zu verschieben. Alternativ dazu kann das Detektorarray 106 ortsfest bleiben und der Detektionsstrahl 29 oder das aufgespaltete Detektionslicht 102 können abgelenkt werden, beispielsweise durch Verschieben des spektral aufspaltenden Elements 100.

Figur 4 zeigt eine zweite Ausführungsform der ersten Detektoranordnung 30. Die zweite Detektoranordnung 19 kann bezüglich ihres Aufbaus der ersten Detektoranordnung 19 entsprechen oder von dieser abweichen. Die zweite Ausführungsform der ersten Detektoranordnung 30 umfasst das spektral aufspaltende Element 100, insbesondere ein Prisma, das den Detektionslichtstrahl 29 nach unterschiedlichen Wellenlängen aufspaltet. Alternativ zu dem Prisma kann ein anderes spektral aufspaltendes Element angeordnet sein. Das nach Wellenlängen aufgespaltete Detektionslicht 102 wird dann über eine Kollimationslinse 120 auf einen sechsten Detektor 122, einen ersten Schlitten 124 und einen zweiten Schlitten 126 gerichtet. Die beiden Schlitten 124, 126 sind an ihrer längsten Seite verspiegelt und schatten einerseits einen Teil des aufgespalteten Detektionslichts 102 zu dem sechsten Detektor 122 hin ab und lenken andererseits Teile des aufgespalteten Detektionslichts 102 hin zu einem siebten Detektor 128 und einem achten Detektor 134 ab. Ein Teil des auf den siebten Detektor 128 gerichteten aufgespalteten Detektionslichts 102 wird mit Hilfe eines dritten Schlittens 130 und eines vierten Schlittens 132 abgeschattet. Ein Teil des auf den achten Detektor 134 gerichteten aufgespalteten Detektionslichts 102 wird mit Hilfe eines fünften Schlittens 136 und eines sechsten Schlittens 138 abgeschattet. Der sechste Schlitten 138 ist an seiner längsten Seite verspiegelt und lenkt so einen Teil des aufgespalteten Detektionslichts 102 in Richtung hin zu einem neunten Detektor 140 ab, wobei ein Teil dieses abgelenkten Lichts mit Hilfe eines siebten Schlittens 142 und eines achten Schlittens 144 abgeschattet ist. Der dritte Schlitten 130 lenkt einen Teil des aufgespalteten Detektionslichts 102 hin zu einem zehnten Detektor 146, wobei ein Teil dieses Lichts mit Hilfe eines neunten Schlittens 148 und eines zehnten Schlittens 150 abgeschattet ist.

Die ersten bis zehnten Schlitten sind längs den Bewegungsrichtungen 118 beweglich angeordnet. Abhängig von Positionen der ersten bis zehnten Schlitten treffen unterschiedliche Wellenlängen des aufgespalteten Detektionslichts 102 auf die sechsten bis zehnten Detektoren. Somit können durch Verschieben der ersten bis zehnten Schlitten unterschiedliche Detektions-Wellenlängenbereiche des Detektionslichts erfasst werden.

Figur 2 zeigt ein Ablaufdiagramm eines Programms zum Ermitteln eines Anregungsspektrums eines fluoreszierenden Farbstoffs. Das Programm ist vorzugsweise auf einer Speichereinheit des Scannmikroskops 20 gespeichert. Das Programm dient dazu, besonders schnell das Anregungsspektrum des fluoreszierenden Farbstoffs vollständig zu ermitteln. Ferner können beim Abarbeiten des Programms anfallende Zusatzinformationen gespeichert werden, anhand derer nach Abarbeiten des Programms rein rechnerisch ein Emissionsspektrum des fluoreszierenden Farbstoffs ermittelt werden kann.

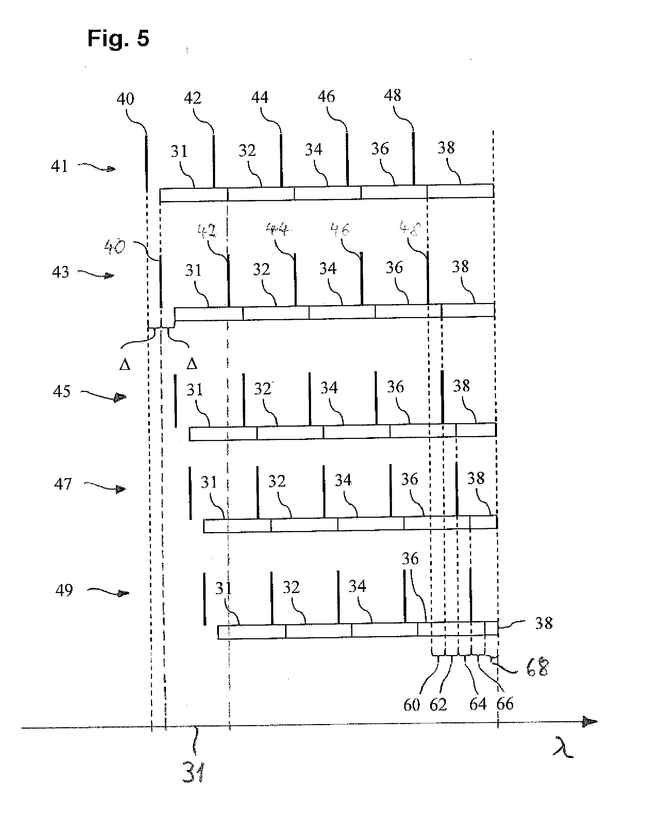

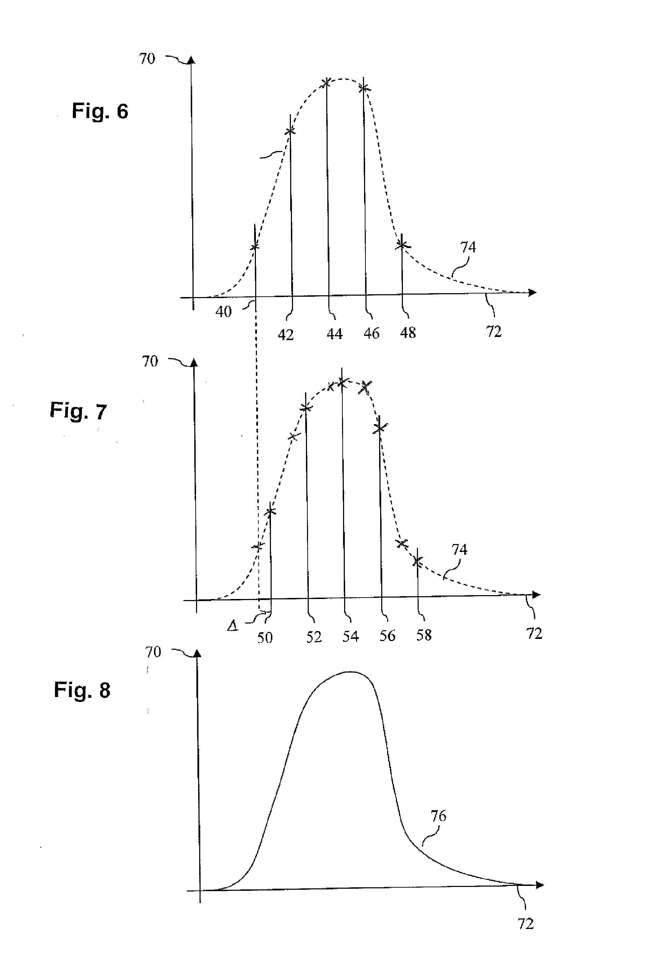

Figur 5 zeigt ein Ablaufdiagramm, in dem die Anregungswellenlängen und die Detektions-Wellenlängenbereiche graphisch dargestellt sind, und die Figuren 6 bis 10 zeigen Wellenlängen-Intensitäts-Diagramme, die zum Erläutern der Funktionsweise des Programms dienen.

Das Programm wird vorzugsweise in einem Schritt S2 gestartet, in dem gegebenenfalls Variablen initialisiert werden, beispielsweise durch Anfordern des Erstellens des Anregungsspektrums auf eine Eingabe eines Benutzers hin. Ferner kann in dem Schritt S2 eine relative Empfindlichkeit der einzelnen Detektoren ermittelt werden. Die relative Empfindlichkeit kann dazu genutzt werden, die Detektoren zu Eichen und/oder die gemessenen Intensitäten anhand der ermittelten Empfindlichkeiten zu normieren.

In einem Schritt S4 wird eine erste Beleuchtungsphase PH_1 durchgeführt. Während der ersten Beleuchtungsphase PH_1 wird die Probe 28 mit Anregungslicht einer ersten Anregungswellenlänge 40 (Figur 5) beleuchtet. Das Anregungslicht entspricht dem Beleuchtungslichtstrahl 21. Beispielsweise wird während der ersten Beleuchtungsphase PH_1 eine erste Zeile des Scanfelds optisch abgetastet. Das von der Probe 28 ausgehende Detektionslicht wird mit Hilfe des spektral aufspaltenden Elements 100 aufgespaltet und das aufgespaltete Detektionslicht 102 wird mit Hilfe der ersten bis fünften Detektoren oder der sechsten bis zehnten Detektoren innerhalb eines ersten Detektions-Wellenlängenbereichs 31, eines zweiten Detektions-Wellenlängenbereichs 32, eines dritten Detektions-Wellenlängenbereichs 34 eines, vierten Detektions-Wellenlängenbereichs 36 bzw. eines fünften Detektions-Wellenlängenbereichs 38 detektiert. Dadurch erhält man die Intensität, die jeweils in den fünf Detektions-Wellenlängenbereichen auftritt, wenn die Probe mit der ersten Anregungswellenlänge 40 bestrahlt wird. Durch ein Aufsummieren der auf die einzelnen Detektoren entfallenden, gegebenenfalls normierten, Intensitäten erhält man eine erste Stützstelle zum Ermitteln des in Figur 6 gestrichelt dargestellten vermuteten Anregungsspektrums 74, insbesondere des Intensitätswerts zu der ersten Anregungswellenlänge 40. Die Information, wie viel Teilintensität auf die einzelnen Detektoren abfällt, wird vorerst nicht genutzt, kann jedoch zum Ermitteln des Emissionsspektrums genutzt werden.

In einem Schritt S6 wird eine zweite Beleuchtungsphase PH_2 durchgeführt, bei der im Vergleich zu der ersten Beleuchtungsphase PH_1 die Detektions-Wellenlängenbereiche 31 bis 38 nicht verschoben sind, weshalb auch kein mechanisches Verstellen des Detektor-Arrays 106 bzw. der ersten bis zehnten Schlitten notwendig ist. Im Gegensatz zu der ersten Beleuchtungsphase PH_1 wird die Probe 28 jedoch mit einer zweiten Anregungswellenlänge 42 beleuchtet. Ferner kann während der zweiten Beleuchtungsphase PH_2 eine zweite Zeile des Scanfeldes optisch abgetastet werden, beispielsweise in entgegen gesetzter Richtung wie bei der ersten Beleuchtungsphase PH_1. Die aufgrund der Beleuchtung mit der zweiten Anregungswellenlänge 42 entstehenden Emissionen werden wiederum gleichzeitig mit je fünf der Detektoren in den fünf Detektions-Wellenlängenbereichen 31 bis 38 detektiert. Alternativ dazu kann der Detektor ausgeblendet werden, der den ersten Detektions-Wellenlängenbereich 31 detektiert, da dieser einen besonders hohen Untergrund hat, da die Anregungswellenlänge 42 in dem ersten Detektions-Wellenlängenbereich 31 liegt. Ein Aufsummieren der erfassten Intensitäten liefert die zweite Stützstelle zum Ermitteln des bisher nur vermuteten Anregungsspektrums 74. Die Information, wie viel Intensität auf die einzelnen Detektoren entfällt wird wiederum gespeichert, um das Emissionsspektrum zu ermitteln.

Nachfolgend werden in den Schritten S8, S 10 und S 12 eine dritte, eine viert und eine fünfte Beleuchtungsphase PH_3, PH_4, und PH_5, abgearbeitet, bei der jeweils entsprechend der ersten und der zweiten Beleuchtungsphase PH_1, PH_2 die Probe mit Anregungslicht einer dritten Anregungswellenlänge 44, einer vierten Anregungswelle 46 bzw. einer fünften Anregungswellenlänge 48 beleuchtet wird. Dies liefert die zweiten bis fünften Stützstellen für das vermutete Anregungsspektrum 74. Entsprechend der zweiten Beleuchtungsphase PH_2 können jeweils die Detektoren ausgeblendet werden, die Detektionslicht der Anregungswellenlänge detektieren, in der die Anregungswellenlänge liegt.

Das Durchlaufen der Schritte S2 bis S 12 und damit das Abarbeiten der ersten bis fünften Beleuchtungsphase PH_1 bis PH_5 stellen einen ersten Durchlauf 41 da, während dem keine mechanische Verstellung der ersten bis fünften Detektoren bzw. der ersten bis zehnten Schlitten nötig ist, sondern lediglich ein Variieren der Anregungswellenlänge, was bei einem oder mehreren Lasern mit verschiedenen oder veränderbaren Emissionswellenlängen nahezu ohne Zeitverzögerung und besonders schnell möglich sein kann.

Die ersten bis fünften Anregungswellenlängen des ersten Durchlaufs 41 können auch als erste bis fünfte Startwellenlängen bezeichnet werden. In einem Schritt S 14 werden die ersten bis fünften Anregungswellenlängen 40 bis 48 variiert, indem jeweils die n-ten Anregungswellenlängen ANW_N ausgehend von den entsprechenden n-ten Startwellenlängen STW_N um einen vorgegeben Schritt Δ erhöht werden. Die Größe des vorgegebenen Schritts Δ kann fest oder variabel vorgegeben sein. In anderen Worten können bei unterschiedlichen Durchläufen oder in unterschiedlichen Beleuchtungsphasen die Wellenlängen um andere Schrittweiten verändert werden.

Gleichzeitig werden in einem Schritt S 16 die ersten bis fünften Detektions-Wellenlängenbereiche 31 bis 38 des Detektionslichts verschoben, indem der n-te Detektions-Wellenlängenbereich DET_N des Detektionslichts um den vorgegebenen Schritt Δ verschoben wird. Das Maß der Verschiebung der Detektions-Wellenlängenbereiche DET_N des Detektionslichts wird vorzugsweise abhängig von dem Maß der Verschiebung der n-ten Anregungswellenlänge ANW_N verschoben, dabei können die Verschiebungen gleich oder unterschiedlich sein. Das Verschieben der Detektions-Wellenlängenbereiche DET_N des Detektionslichts wird dadurch erreicht, dass das Detektor-Array 106 oder die ersten bis zehnten Schlitten verschoben werden, so dass bei jedem Durchlauf 41 bis 49 andere Detektions-Wellenlängenbereiche mit den ersten bis fünften bzw. sechsten bis zehnten Detektoren detektiert werden. Alternativ dazu kann auch das Detektionslicht abgelenkt werden, beispielsweise durch Verschieben oder Verdrehen des spektral aufspaltenden Elements.

In einem Schritt S18 wird überprüft, ob die n-te Anregungswellenlänge ANW_N der nachfolgenden "n+1-ten" Startwellenlänge STW_N + 1 entspricht. Ist die Bedingung des Schritts S 18 erfüllt, so ist noch nicht der gesamte Detektions-Wellenlängenbereich durchlaufen, das Abarbeiten des nächsten Durchlaufs, insbesondere des zweiten Durchlaufs 43 wird begonnen und die Bearbeitung wird dazu erneut in dem Schritt S4 fortgesetzt. Ist die Bedingung des Schritts S 18 erfüllt, so wurde der gesamte Detektions-Wellenlängenbereich durchlaufen, alle Durchläufe 41, 43, 45, 47 wurden abgearbeitet und es sind genügend Informationen zum Erstellen des Anregungsspektrums und des Emissionsspektrums aufgenommen worden. Das Programm kann in einem Schritt S20 beendet werden.

Wird jedoch das Programm erneut in dem Schritt S4 mit den verschobenen Anregungswellenlängen und den verschobenen Detektions-Wellenlängenbereichen des Detektionslichts abgearbeitet, so werden nacheinander in einem zweiten Durchlauf 43 die ersten bis vierten Anregungswellenlängen um den Verschlebungswert Δ verschoben. Nach Durchlaufen des zweiten Durchlaufs 43 sind zehn Stützstellen des vermuteten Anregungsspektrums 74 bekannt, wie in Figur 7 dargestellt. Nach Durchlaufen der fünf Beleuchtungsphasen innerhalb des zweiten Durchlaufs werden die fünf Beleuchtungsphasen innerhalb eines dritten Durchlaufs 45, dann innerhalb eines vierten Durchlaufs 47 und abschließend innerhalb eines fünften Durchlaufs 49 abgearbeitet.

Somit ist nach dem fünfmaligen Durchlaufen der Schritte S4 bis S 18 und somit nach Abarbeiten der fünf Durchläufe 41, 43, 45, 47 und 49 das gesamte erste Anregungsspektrum 76 des Farbstoffs bekannt, obwohl das Detektor-Array 106 bzw. die ersten bis zehnten Schlitten lediglich fünfmal mechanisch verstellt wurden.

Bei den Darstellungen in den Figuren und den entsprechenden Erläuterungen wird lediglich von fünf Durchläufen ausgegangen. Dies dient jedoch lediglich der einfacheren Darstellung. Es können auch weniger Durchläufe oder vorzugsweise deutlich mehr Durchläufe mit deutlich kleineren Schritten Δ und Verschiebungen abgearbeitet werden, wodurch die gesuchten Spektren deutlich präziser ermittelt werden können. Ferner können in den einzelnen Beleuchtungsphasen jeweils zwei oder mehr Zeilen des Scanfelds optisch abgetastet werden. Vorzugsweise wird die Anzahl der Zeilen pro Beleuchtungsphase so gewählt, dass nach Ermitteln der vollständigen Spektren ein vollständiges Bild der Probe vorliegt. Die Spektren können auch für jeden einzelnen Pixel des Bildes bestimmt werden.

Das Programm kann in einem Schritt S20 beendet werden. Alternativ dazu kann das Programm erneut für eine andere Stelle der Probe oder eine andere Probe abgearbeitet werden. Bei einem Abarbeiten des Programms können Anregungsspektren zweier oder mehrerer Farbstoffe ermittelt werden. Dabei entsteht zunächst ein gemischtes Anregungsspektrum, das beispielsweise anhand des Emissionsspektrums 78 in die einzelnen Anregungsspektren zerlegt werden kann.

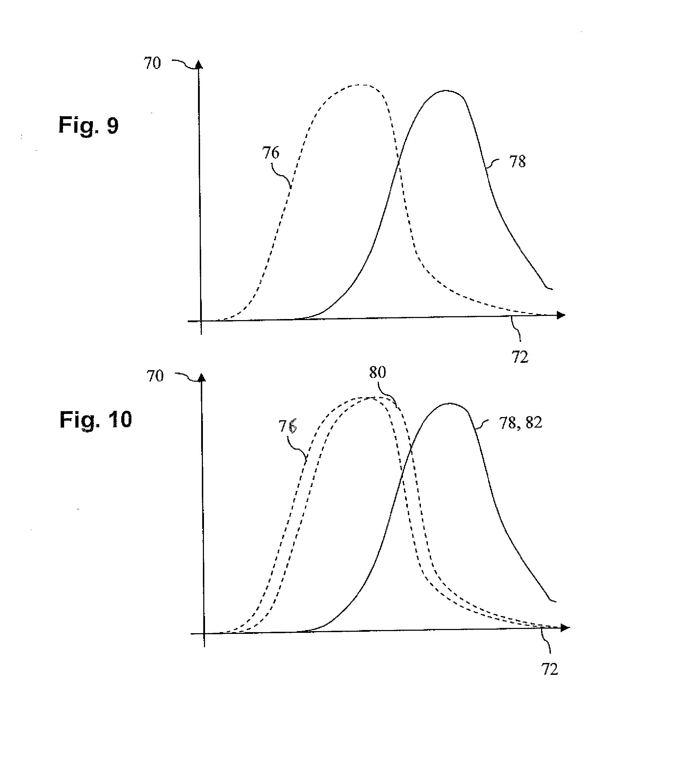

Zusätzlich zu dem ersten Anregungsspektrum 76 kann nun auch noch das in Figur 9 gezeigte erste Emissionsspektrum 78 ermittelt werden. Dazu werden die bisher noch nicht verwendeten Informationen genutzt, aus denen hervorgeht, welcher Anteil der Gesamtintensität bei einer der Anregungswellenlängen ANW_N auf die fünf einzelnen detektierten Detektions-Wellenlängenbereiche DET_N entfällt. Dadurch erhält man zu jeder Anregungswellenlänge ANW_N ein Emissionsspektrum mit fünf Stützstellen. Die Anzahl der Stützstellen kann beispielsweise erhöht werden, indem mehr als fünf Detektoren zum Detektieren des Detektionslichts verwendet werden.

In Figur 10 ist gezeigt, dass bei sich überlappenden oder nahezu identischen Emissionsspektren 78, 82 zweier unterschiedlicher Farbstoffe durch einen Vergleich zu den entsprechenden Anregungsspektren 76, 80 eine Unterscheidung dieser Farbstoffe einfach möglich ist, da die Farbstoffe aufgrund ihrer Anregungsspektren 76, 80 unterschieden werden können. Besonders anschaulich und damit vorteilhaft kann nun eine dreidimensionale Darstellung gewonnen werden, bei der an einer ersten Achse die Anregungswellenlängen, bei einer zweiten Achse die Emissionswellenlängen und bei einer dritten Achse die Intensitäten aufgetragen sind. Anhand dieses dreidimensionalen Spektrums, das auch als spektrale Matrix bezeichnet werden kann, ist nun jeder Farbstoff eindeutig identifizierbar. Nach Identifizierung der Farbstoffe können die Signale der einzelnen Farbstoffe isoliert dargestellt werden, wodurch eine farbindividuelle Verteilung der Farbstoffe als Bild darstellbar ist.

Die Erfindung ist nicht auf die angegebenen Ausführungsbeispiele beschränkt. Beispielsweise kann zum Beleuchten der Probe jegliche breitbandige Lichtquelle, beispielsweise eine Laserlichtquelle oder eine Quecksilberdampfquelle verwendet werden. Ferner können auch mehrere Lichtquellen verwendet werden. Das breitbandige Licht kann auch als Weißlicht bezeichnet werden und somit kann die breitbandige Lichtquelle auch als Weißlichtquelle bezeichnet werden. Ferner kann das Verfahren mit weniger als fünf, beispielsweise nur einem Durchlauf, oder mehr als fünf Durchläufen abgearbeitet werden

### Bezugszeichenliste:

- 18: zweiter Strahlteiler
- 19: zweite Detektoranordnung
- 20: Scanmikroskop
- 21: Beleuchtungslichtstrahl
- 22: Lichtquelle
- 24: Scaneinheit
- 26: erster Strahlteiler
- 27: Objektiv
- 28: Probe
- 29: Detektionslichtstrahl
- 30: erste Detektoranordnung
- 31: erster Detektions-Wellenlängenbereich
- 32: zweiter Detektions-Wellenlängenbereich
- 34: dritter Detektions-Wellenlängenbereich
- 36: vierter Detektions-Wellenlängenbereich
- 38: fünfter Detektions-Wellenlängenbereich
- 40: erste Anregungswellenlänge
- 41: erster Durchlauf
- 42: zweite Anregungswellenlänge
- 43: zweiter Durchlauf
- 44: dritte Anregungswellenlänge
- 45: dritter Durchlauf
- 46: vierte Anregungswellenlänge
- 47: vierter Durchlauf
- 48: fünfte Anregungswellenlänge
- 49: fünfter Durchlauf
- 60: erster Emissionsbereich
- 62: zweiter Emissionsbereich
- 64: dritter Emissionsbereich
- 66: vierter Emissionsbereich
- 68: fünfter Emissionsbereich
- 70: Intensität
- 72: Wellenlänge
- 74: vermutetes Anregungsspektrum
- 76: erstes Anregungsspektrum
- 78: erstes Emissionsspektrum
- 80: zweites Anregungsspektrum
- 82: zweites Emissionsspektrum
- 100: spektral aufspaltendes Element
- 102: spektral aufgespalteter Detektionslichtstrahl
- 140: Blendenanordnung
- 106: Detektor-Array
- 108: erster Detektor
- 110: zweiter Detektor
- 112: dritter Detektor
- 114: vierter Detektor
- 116: fünfter Detektor
- 118: Bewegungsrichtung
- 120: Kollimationslinse
- 122: sechster Detektor
- 124: erster Schlitten
- 126: zweiter Schlitten
- 128: siebter Detektor
- 130: dritter Schlitten
- 132: vierter Schlitten
- 134: achter Detektor
- 136: fünfter Schlitten
- 138: sechster Schlitten
- 140: neunter Detektor
- 142: siebter Schlitten
- 144: achter Schlitten
- 146: zehnter Detektor
- 148: neunter Schlitten
- 150: zehnter Schlitten
- START: Programmstart
- PH1 ― PH_5: erste bis fünfte Beleuchtungsphase
- ANW_N: die n-te Anregungswellenlänge
- STW_N: die n-te Anregungswellenlänge
- DET_N: der n-te Detektions-Wellenlängenbereich
- Δ: Verschiebungswert
- n: Bedingung nicht erfüllt
- y: Bedingung erfüllt
- S2 ― S20: Schritte zwei bis zwanzig
- END: Programmende

## Patentansprüche

1. Verfahren zum Ermitteln eines Anregungsspektrums (76) und/oder eines Emissionsspektrums (78) mindestens eines fluoreszierenden Farbstoffs mit Hilfe eines Fluoreszenzmikroskops,
bei dem eine Probe (28), die den fluoreszierenden Farbstoff aufweist, mit Hilfe von Anregungslicht (21) einer ersten Anregungswellenlänge beleuchtet wird und von der Probe (28) ausgehendes Detektionslicht (29) eines vorgegebenen Detektions-Wellenlängenbereichs detektiert wird und bei dem abhängig von dem detektierten Detektionslicht (29) das Anregungs- und/oder Emissionsspektrum (76, 78) ermittelt wird,
**dadurch gekennzeichnet, dass** eine erste Beleuchtungsphase (PH_1) und mindestens eine zweite Beleuchtungsphase (PH_2) durchgeführt wird,
in der ersten Beleuchtungsphase (PH_1) die Probe (28) mit Hilfe von Anregungslicht (21) der ersten Anregungswellenlänge (40) beleuchtet wird und Detektionslicht (29) eines ersten Detektions-Wellenlängenbereichs (31) mit Hilfe eines ersten Detektors und gleichzeitig mindestens Detektionslicht (29) eines zweiten Detektions-Wellenlängenbereichs (32) mit Hilfe eines zweiten Detektors detektiert werden und
in der zweiten Beleuchtungsphase (PH_2) die Probe (28) mit Hilfe von Anregungslicht (21) einer zweiten Anregungswellenlänge (42) beleuchtet wird und Detektionslicht (29) mindestens des ersten und/oder zweiten Detektions-Wellenlängenbereichs (31, 32) detektiert wird.

2. Verfahren nach Anspruch 1,
bei dem die erste und die zweite Beleuchtungsphase (PH_2) zunächst in einem ersten Durchlauf (41) durchgeführt werden und
bei dem bei mindestens einem zweiten Durchlauf (43) die Probe (28) mit Hilfe von Anregungslicht (21) beleuchtet wird, dessen Anregungswellenlänge bezogen auf die erste Anregungswellenlänge verschoben ist und das von der Probe (28) ausgehende Detektionslicht (29) eines Detektions-Wellenlängenbereichs detektiert wird, der in Bezug auf den Detektions-Wellenlängenbereich beim ersten Durchlauf (41) abhängig von der veränderten Anregungswellenlänge verschoben ist,
und bei dem bei weiteren Durchläufen (43, 45, 47, 49) jeweils die Anregungswellenlänge verändert und der Detektions-Wellenlängenbereich verschoben werden,
wobei jeder Durchlauf (41, 43, 45, 47, 49) eine erste Beleuchtungsphase (PH_1) und mindestens eine zweite Beleuchtungsphase (PH_2) umfasst, und wobei bei den weiteren Durchläufen (43, 45, 47, 49) jeweils die Anregungswellenlängen verändert und die Detektions-Wellenlängenbereiche verschoben werden.

3. Verfahren nach einem der Ansprüche 1 oder 2,
bei dem gleichzeitig Detektionslicht (29) der beiden und mindestens eines weiteren Detektions-Wellenlängenbereichs (31, 32, 34, 36, 38) mit Hilfe von drei den Detektions-Wellenlängenbereichen (31, 32, 34, 36, 38) zugeordneten Detektoren detektiert werden.

4. Verfahren nach einem der vorstehenden Ansprüche,
bei dem bei jedem Durchlauf (41, 43, 45, 47, 49) mindestens drei Beleuchtungsphasen (PH_1, PH_2, PH_3, PH_4, PH_5) durchlaufen werden, denen entsprechend drei Anregungswellenlängen (40, 42, 44, 46, 48) zugeordnet sind, von denen ausgehend in jedem Durchlauf (41, 43, 45, 47, 49) die Anregungswellenlängen (50, 52, 54, 56, 58) schrittweise verändert werden.

5. Verfahren nach einem der vorstehenden Ansprüche,
bei dem in jeder Beleuchtungsphase (PH_1, PH_2, PH_3, PH_4, PH_5) der Detektor ausgeblendet wird, in dessen Wellenlängenbereich die aktuelle Anregungswellenlänge des Anregungslichts (21) liegt.

6. Verfahren nach einem der vorstehenden Ansprüche,
bei dem anhand des Anregungsspektrums (76, 80) Fluoreszenzsignale von Farbstoffen unterschieden werden, deren Emissionsspektren (78, 82) sich überlappen.

7. Verfahren nach einem der vorstehenden Ansprüche,
bei dem abhängig von dem Anregungs- und Emissionsspektrum (76, 78) eine spektrale Matrix ermittelt wird.

8. Verfahren nach einem der vorstehenden Ansprüche,
bei dem vor dem Ermitteln des Anregungs- und/oder Emissionsspektrums (76, 78) die relative Empfindlichkeit der Detektoren und/oder von Detektorbereichen der Detektoren ermittelt werden.

9. Verfahren nach einem der vorstehenden Ansprüche,
bei dem zum Beleuchten der Probe (28) eine breitbandige Laserlichtquelle verwendet wird.

10. Verfahren nach einem der vorstehenden Ansprüche,
bei dem zum Ermitteln des Anregungs- und/oder Emissionsspektrums (76, 78) ein Scan-Mikroskop (20) verwendet wird.

11. Verfahren nach Anspruch 10,
bei dem nach einer vorgegebenen Anzahl von gescannten Zeilen die nächste Beleuchtungsphase (PH_1, PH_2, PH_3, PH_4, PH_5) durchgeführt wird.

12. Verfahren nach einem der Ansprüche 10 oder 11,
bei dem die Anregung und Detektion bidirektional erfolgt.

13. Verfahren nach einem der Ansprüche 10 bis 12,
bei dem während einer der Beleuchtungsphasen (PH_1, PH_2, PH_3, PH_4, PH_5) in eine erste Richtung gescannt wird und bei dem die darauffolgende Beleuchtungsphase (PH_1, PH_2, PH_3, PH_4, PH_5) durchgeführt wird, wenn in eine der ersten Richtung entgegen gesetzte Richtung gescannt wird.
